# EUROPÄISCHE PATENTANMELDUNG

(11) **EP 2 161 669 A1**
(43) Veröffentlichungstag der Anmeldung: **10.03.2010**
(21) Anmeldenummer: 09169796.1
(22) Anmeldetag: 09.09.2009
(51) Int. Cl.: G06F 17/30, G06F 17/22

(54) **Verfahren zum Automatisieren eines Datenaustauschs zwischen einem Endgerät eines Anwenders und einer von einem Fremdserver bereitgestellten Website**

(30) Priorität: 09.09.2008 DE 102008046638
(71) Anmelder: Chattensoft e.K., 10787 Berlin (DE)
(72) Erfinder: Sorell, Jochen, 10787 Berlin (DE)
(74) Vertreter: Ninnemann, Detlef

(57) **Zusammenfassung**

Verfahren zum Automatisieren eines Datenaustauschs zwischen dem Endgerät eines Anwenders und einer von einem Fremdserver bereitgestellten Ziel-Website mit einer Aufzeichnung einer Basiskommunikation mit dem Fremdserver durch Aufrufen der Ziel-Website, Aufzeichnung von die Ziel-Website charakterisierenden Datensätzen, Aufnahme und Speicherung der Eingabe von Datensätzen und Steuerbefehlen des Anwenders beim Benutzen der Ziel-Website sowie einer Folgekommunikation durch Abspielen der in der Basiskommunikation aufgezeichneten Datensätze und Steuerbefehle durch Aufrufen der Ziel-Website, Speicherung der die Ziel-Website charakterisierenden aktuellen Datensätze, Vergleichen der aufgezeichneten Datensätze mit den gespeicherten aktuellen Datensätzen, Abbrechen der Folgekommunikation bei nicht tolerierter Abweichung oder Fortsetzen der Folgekommunikation bei Übereinstimmung oder tolerierter Abweichung Aufrufen und Ausführen der in der Basiskommunikation gespeicherten Datensätze und Steuerbefehle des Anwenders beim Benutzen der Ziel-Website und Beenden der Folgekommunikation. Das Verfahren ist bei beliebigen Websites unabhängig von deren Inhalt, Branche oder regionalen Herkunft einsetzbar und erfordert bei größtmöglicher Datenaustauschsicherheit weder Vorinformationen über den Inhalt der Websites noch Programmierkenntnisse.

## Beschreibung

Die Erfindung betrifft ein Verfahren zum Automatisieren eines Datenaustauschs zwischen einer elektronischen Datenverarbeitungseinrichtung (Endgerät) eines Anwenders und mindestens einer von einem Fremdserver bereitgestellten Ziel-Website bzw. Seite oder Page einer Ziel-Website.

Da ein Anwender oder Nutzer von im Internet bereit gestellten Webdiensten bei der Dateneingabe in eine Seite oder Page einer Website oftmals gleiche oder ähnliche Handlungsschritte, beispielsweise durch die Eingabe einer Kundennummer und eines Passworts für ein Login, die Eingabe aktueller Daten und ein Logout tätigt, ist es erwünscht, diese Vorgänge zu automatisieren, ohne dass hierfür ein Programmierer zum Bereitstellen eines automatisierten Ablaufprogramms erforderlich ist.

Zur Automatisierung des Datenaustauschs an der Schnittstelle zwischen zwei elektronischen Datenverarbeitungseinrichtungen, wie beispielsweise einem Fremdserver, der Websites im Internet bereitstellt, und einem mit dem Internet verbundenen, als Endgerät bezeichneten Computer eines Anwenders oder Nutzers sind üblicherweise gleichzeitig eine genaue Vorschrift über den Ablauf des Datenaustauschs und die Kenntnis über die Konfiguration der elektronischen Datenverarbeitungseinrichtung auf beiden Seiten der Schnittstelle erforderlich. Damit sind die üblichen Verfahren zum Automatisieren des Datenaustauschs an der Schnittstelle zwischen zwei elektronischen Datenverarbeitungseinrichtungen technisch gehalten und erfordern den Einsatz eines erfahrenen Technikers oder Programmierers, da der Anwender in aller Regel hiermit überfordert ist.

Ein bekanntes Verfahren zum Automatisieren des Datenaustauschs zwischen einem Endgerät und einem Fremdserver ist das so genannte "Web Scraping", bei dem Webseiten abgerufen und Informationen durch gezieltes Extrahieren benötigter Daten gewonnen werden. Das Web Scraping wird in Suchmaschinen zum Durchsuchen des Internets, zur Analyse von Webseiten und zum Sammeln von Daten sowie für ein erweitertes Browsen eingesetzt, um einen Browser mit weiteren Funktionen auszustatten oder umständliche Vorgänge zu vereinfachen, indem Anmeldevorgänge bei Foren automatisiert oder Dienste einer Webseite abgerufen werden, ohne dass der Nutzer die Webseite besuchen muss.

Eine weitere Anwendung des Web Scrapings besteht in dem Ersatz von Web-Diensten, bei denen ein Anbieter von Webseiten den Abruf und die Weiterverarbeitung von Informationen dadurch erleichtert, dass er Daten nicht nur in einer für den Anwender lesbaren Webseite darstellt, sondern sie zusätzlich in einem maschinenlesbaren Format, beispielsweise XML, aufbereitet, so dass gezielt abgefragte Daten dem Anwender dadurch als Web-Service zur automatisierten Weiterverarbeitung zur Verfügung gestellt werden. Da der Webseitenanbieter aber häufig kein Interesse an dem mechanisierten Abruf seiner Daten hat oder die mit Errichtung eines Web-Services verbundenen hohen Kosten scheut, wird vom Anwender das Web Scraping eingesetzt, um die gewünschten Daten aus einer Webseite heraus zu filtern. Das hierfür erforderliche Datenextraktionsprogramm setzt jedoch eine technische Programmierung voraus, die vom üblichen Anwender nicht zu bewerkstelligen ist. Darüber hinaus weisen diese Extraktionsprogramme den Nachteil auf, dass sie keine Vorschriften zur Stabilisierung des Ablaufs des Datenaustauschs enthalten und damit unsicher sind.

Einen weiteren automatisierten Datenaustausch zwischen einem Web Server und einem Client, d.h. einer elektronischen Datenverarbeitungseinrichtung eines Web-Anwenders oder Web-Nutzers, besteht in der Bereitstellung so genannter "Cookies". Diese entstehen, wenn bei einem Zugriff auf einen Web Server neben anderen HTTP-Kopfzeilen in der Antwort zusätzlich eine Cookie-Zeile übertragen wird, deren Information dann lokal auf dem Endgerät üblicherweise in einer Cookie-Textdatei gespeichert wird. Bei nachfolgenden weiteren Zugriffen auf den Web Server sucht der Browser des Endgeräts alle Cookies in dieser Datei heraus, die zum Web Server und Verzeichnispfad des aktuellen Aufrufs passen und schickt diese Cookie-Daten im Header des HTTP-Zugriffs mit zurück, womit die Cookies jeweils an jenen Web Server zurückgehen, von dem sie stammten. Hierbei handelt es sich jedoch nicht um eine individuelle Kommunikation zwischen dem Endgerät eines Anwenders und einem Web Server eines Anbieters, beispielsweise zum Abrufen bestimmter, vom Anwender gewünschter Informationen, sondern um fest vorgegebene, vom Web Server bereitgestellte Informationen.

Aufgabe der vorliegenden Erfindung ist es, ein Verfahren zum Automatisieren des Datenaustauschs zwischen dem Endgerät eines Anwenders und einer Ziel-Website eines Fremdservers bereitzustellen, das bei beliebigen Seiten einer Website unabhängig von deren Inhalt, Branche oder regionalen Herkunft einsetzbar ist und das bei größtmöglicher Datenaustauschsicherheit weder Vorinformationen über den Inhalt der Seite einer Website noch Programmierkenntnisse erfordert.

Diese Aufgabe wird erfindungsgemäß durch die Merkmale des Anspruchs 1 gelöst.

Das erfindungsgemäße Verfahren zum Automatisieren des Datenaustauschs zwischen dem Endgerät eines Anwenders und einer Ziel-Website bzw. Seite oder Page einer Ziel-Website eines Ziel- oder Fremdservers ist bei beliebigen Websites unabhängig von deren Inhalt, Branche oder regionalen Herkunft einsetzbar, gewährleistet eine größtmögliche Datenaustauschsicherheit und erfordert weder Vorinformationen über den Inhalt der Websites noch Programmierkenntnisse.

Das erfindungsgemäße Verfahren bezieht sich insbesondere auf intuitiv bedienbare Publikumswebsites, die sich nicht an eine geschlossene Gruppe von Anwendern wendet, die sich kennen oder Absprachen getroffen haben, sondern sich an öffentliche Anwender zum Zeitpunkt der Erstellung der Website wendet, d. h. eine unbekannte Anwendergruppe, für die die Publikumswebsite entsprechend aufbereitet wird. Eine Publikumswebsite ist allgemeingültig und immer anwendbar, wenn der Anwender die Publikumswebsite grundsätzlich bedienen kann, wobei das Verfahren keinerlei Vorinformationen über den Inhalt der Seiten einer Publikumswebsite benötigt. Dabei nutzt das erfindungsgemäße Verfahren den Umstand, dass einerseits dem Anwender die Publikumswebsite vertraut ist und er über inhaltliche Vollkompetenz bezüglich der Datenpflege verfügt und andererseits der Anbieter der Publikumswebsite daran interessiert ist, dem Anwender die Bedienung der Seiten seiner Publikumswebsite zu erleichtern, so dass ein wechselseitiges Interesse sowohl des Anbieters als auch des Anwenders an einer einfachen, klaren und verlässlichen Darstellung und Bedienbarkeit einer Publikumswebsite bzw. Page einer Publikumswebsite besteht.

Das erfindungsgemäße Verfahren findet insbesondere dort Anwendung, wo eine manuelle Datenpflege repetierend stattfindet, d.h. der Anwender gezwungen ist, bei der Datenpflege einer Website bzw. der Seiten einer Website manuell repetierende, mittels eines maschinell wiederholbaren Ablaufs ausführbare Vorgänge durchzuführen. Dabei benötigt der Anwender für die Automation keinerlei Programmierkenntnisse, sondern führt die Automation mit den Verfahrensschritten 1.1 bis 1.12 des erfindungsgemäßen Verfahrens selbst durch.

Kern des erfindungsgemäßen Verfahrens ist die Aufzeichnung einer Web-Server-Kommunikation im Rahmen einer Basiskommunikation eines Anwenders und einer Folgekommunikation des Anwenders. Dabei setzt das erfindungsgemäße Verfahren einen Recorder und einen Player ein, wobei die zu automatisierende Verarbeitung der Seite der Ziel-Website durch den Recorder mit Hilfe einer 3-Band-Maschine aufgezeichnet wird, die zwei Compare-Bänder und ein Steuerungsband enthält. Im ersten Compare-Band wird ein so genanntes DOM (Document Object Model) aufgezeichnet, während das zweite Compare-Band simultan einen Rohdatenstrom aufzeichnet. Im Steuerungsband werden die eigentlichen Aktivitäten eines professionellen Lead Users bzw. des Anwenders aufgezeichnet.

Zur Absicherung der Website-Umgebung wird sowohl ein High Pass Compare mithilfe des ersten Bandes als auch ein Low Pass Compare mithilfe des zweiten Bandes durchgeführt. Wenn beide Vergleiche erfolgreich durchgeführt werden konnten, wird vom dritten Band, dem Steuerungsband, die auszuführende Operation ausgelesen.

Bei einem Document Objekt Model oder DOM handelt es sich um eine Programmierschnittstelle (API) für den Zugriff auf HTML- oder XML-Dokumente. Im Sinne einer objektorientierten Programmierung besteht das DOM aus einem Satz von Klassen zusammen mit deren Methoden und Attributen. Es erlaubt Computerprogrammen, dynamisch den Inhalt, die Struktur und das Layout eines Dokuments zu verändern, indem logische Einheiten des Dokuments als Instanzen entsprechender Klassen in einem Klassenbaum abgebildet werden.

Eine vorteilhafte Ausgestaltung des erfindungsgemäßen Verfahrens ist gekennzeichnet durch die Aufzeichnung einer Basiskommunikation des Anwenders mit dem die Ziel-Website bereitstellenden Fremdserver durch
- Aufrufen einer Seite der Ziel-Website,
- Aufnahme und Speicherung eines die Seite der Ziel-Website charakterisierenden Document Object Models (DOM),
- simultane Aufnahme eines die Seite der Ziel-Website charakterisierenden Rohdatenstroms,
- Aufnahme und Speicherung der Eingabe von Datensätzen und Steuerbefehlen des Anwenders beim Benutzen der Seite der Ziel-Website,
- Wiederholen der vorstehenden Schritte für weitere Seiten der Ziel-Website,
- Beenden der Aufzeichnung der Basiskommunikation und eine Folgekommunikation durch Abspielen der in der Basiskommunikation aufgezeichneten Datensätze und Steuerbefehle durch
- Aufrufen einer Seite der Ziel-Website,
- Aufnahme und Speicherung eines die Seite der Ziel-Website charakterisierenden aktuellen Document Object Models (DOM),
- simultane Aufnahme eines die Seite der Ziel-Website charakterisierenden aktuellen Rohdatenstroms,
- Durchführen eines High Pass Compare zwischen dem in der Basiskommunikation aufgezeichneten und dem in der Folgekommunikation gespeicherten DOM und
- Durchführen eines Low Pass Compare zwischen dem in der Basiskommunikation aufgezeichneten Rohdatenstrom und dem in der Folgekommunikation gespeicherten Rohdatenstrom,
- Abbrechen der Folgekommunikation bei einer Abweichung und/oder Überschreiten einer vorgegebenen Toleranzschwelle bei einer Abweichung,
- Fortsetzen der Folgekommunikation bei einer Übereinstimmung oder einer innerhalb der vorgegebenen Toleranzschwelle liegenden Abweichung, Aufrufen und Ausführen der in der Basiskommunikation gespeicherten Datensätze und Steuerbefehle des Anwenders beim Benutzen der Seite der Ziel-Website
- Wiederholen der vorstehenden Verfahrensschritte für weitere Seiten der Ziel-Website und
- Beenden der Folgekommunikation
   Vorzugsweise werden der in der Basiskommunikation aufgezeichnete Rohdatenstrom und der in der Folgekommunikation aufgenommene aktuelle Rohdatenstrom transportbereinigt, d. h. aus dem Rohdatenstrom werden die für die Übertragung des Rohdatenstroms benötigten Paketdaten und Adressinformationen ausgefiltert und nur die inhaltlich relevanten Daten weiterverarbeitet.
   Weiterhin können die in der Basiskommunikation aufgezeichneten Datensätze, das in der Basiskommunikation aufgezeichnete DOM bzw. der in der Basiskommunikation aufgezeichnete Rohdatenstrom mit gespeicherten Website-Filterdaten gefiltert und den Anwender nicht interessierende oder störende Inhalte der Ziel-Website entfernt werden.
   Das erfindungsgemäße Verfahren ist in Varianten durchführbar.
   In einer ersten Variante werden die in der Basiskommunikation vom Anwender eingegebenen Datensätze identisch aufgezeichnet und in der Folgekommunikation übereinstimmend wiedergegeben, d.h. es wird der exakte Datenstrom des Anwenders aufgezeichnet und wiedergegeben.
   Da ein Kriterium für die Güte der Automatisierung die Robustheit des erfindungsgemäßen Verfahrens gegenüber Änderungen an der Struktur der Seiten einer Ziel-Website ist, die in vielen Fällen jedoch unbekannt ist, sind fehlertolerante Extraktionsalgorithmen erforderlich, mit denen Datenstrukturen, wie etwa Kaufpreisangaben oder Zeitangaben, auch ohne feste Vorgaben erkannt und interpretiert werden können.
   Zu diesem Zweck werden in einer zweiten Variante die in der Basiskommunikation aufgezeichneten Datensätze, das in der Basiskommunikation aufgezeichnete DOM bzw. der in der Basiskommunikation aufgezeichnete Rohdatenstrom mit einer Variablen versehen und die in der Folgekommunikation vorgegebenen Toleranzschwellen nachgesetzt, d.h. der Datenstrom wird während der Aufnahme mit einer Variabilität versehen, wozu der Einsatz eines Filters erforderlich ist. Dies wird beispielsweise dann notwendig, wenn das gleiche DOM aufgebaut wird, obwohl von der Seite der Website real andere Daten geliefert werden, beispielsweise bei internen Änderungen der Seite der Website, Änderungen der mit der Seite der Website verbundenen Werbung oder dergleichen. Sollten die Bänder nach Nachsetzen des Filters identisch gewertet worden sein, wird die Seite der Website als identisch gewertet. Der Datenstrom des Steuerungsbandes kann dann abgespielt werden.
   Durch diese Maßnahme wird die Ablauftoleranz erweitert, d.h. es können aktuelle Seiten der Website als ähnlich der Originalaufnahme-Website betrachtet werden, auch wenn sie kleine, logisch vernachlässigbare Unterschiede aufweisen.
   Das Verfahren liefert durch den High Pass- und Low Pass-Compare die folgenden, nicht abschließend aufgezählten Effekte:
   1. Die Sicherheit wird erhöht, indem der Compare auch bei Trojaner-Angriffen alarmiert wird; bei der nachfolgenden manuellen Überprüfung des Protokolls kann der Trojaner dann identifiziert werden;
   2. Mit dem Verfahren kann eine so genannte Watchdog-Lösung realisiert werden, bei dem eine Komponente eines Systems verwendet wird, die die Funktion anderer Komponenten überwacht. Wird dabei eine mögliche Fehlfunktion erkannt, so wird dies entweder gemäß Systemvereinbarung signalisiert oder es werden geeignete Sprunganweisungen eingeleitet, die das anstehende Problem bereinigen.
   3. Mit dem Verfahren kann auch eine Maschinensteuerung realisiert werden, indem ein Steuermuster im Aufzeichnungsverfahren erstellt und eine Änderung von Einstellungen im Abspielverfahren vorgenommen wird.

Die für ein automatisiertes Ablaufprogramm in den Folgekommunikationen erforderlichen, bei der Basiskommunikation gewonnenen Daten werden vorzugsweise auf einer 3-Band-Maschine in einem Aufnahme-Modus (Recorder) aufgezeichnet, wobei nach dem Aufrufen der Ziel-Website simultan
- das eine Seite der Ziel-Website charakterisierende DOM auf einem ersten Band der 3-Band-Maschine aufgezeichnet wird,
- der die Seite der Ziel-Website charakterisierende transportbereinigte Rohdatenstrom auf einem zweiten Band der 3-Band-Maschine aufgezeichnet wird,
- die vom Anwender beim Benutzen der Ziel-Website eingegebenen Datensätze und Steuerbefehle auf einem dritten Band (Steuerband) der 3-Band-Maschine aufgezeichnet werden,
- die vorstehend genannten Schritte simultan für weitere Seiten der Ziel-Website wiederholt werden und
die Aufzeichnung der Basiskommunikation beendet wird.

Die nachfolgende Folgekommunikation läuft in einem Abspielmodus (Player) der 3-Band-Maschine ab, wobei
- die Seite der Ziel-Website durch eine erste Information des Steuerbandes aufgerufen wird,
- das DOM und der Rohdatenstrom der Seite der Ziel-Website in der Folgekommunikation aufgezeichnet werden,
- ein Vergleich des ersten und zweiten Bandes der Basiskommunikation mit dem ersten und zweiten Band der Folgekommunikation in einem High Pass Compare und Low Pass Compare durchgeführt wird,
- die Folgekommunikation bei einer Abweichung der beiden Datensätze und/oder Überschreiten einer vorgegebenen Toleranzschwelle abgebrochen wird oder
- die Folgekommunikation bei einer Übereinstimmung oder einer innerhalb der vorgegebenen Toleranzschwelle liegenden Abweichung des DOM und Rohdatenstroms der Ziel-Website fortgesetzt wird, indem die in der Basiskommunikation gespeicherten Datensätze und Steuerbefehle des Anwenders beim Benutzen der Seite der Ziel-Website aufgerufen und ausgeführt werden,
- die vorstehenden Schritte der Folgekommunikation für weitere Seiten der Ziel-Website wiederholt werden und
- die Folgekommunikation beendet wird.

Dabei wird der die Ablaufstabilität bewirkende High Pass Compare und der Low Pass Compare vorzugsweise mittels des ersten und zweiten Bandes der 3-Band-Maschine durchgeführt.

Daten, die erst zur Laufzeit, d.h. in der Folgekommunikation verschlüsselt oder unverschlüsselt zur Verfügung stehen, können beim Fortsetzen der Folgekommunikation nach dem Vergleich der in der Basiskommunikation aufgezeichneten Datensätze mit den in der Folgekommunikation aufgezeichneten Datensätzen von externen Datenquellen bezogen werden, wobei durch den Rückgriff auf externe Datenquellen die Flexibilität wesentlich erhöht wird. Ein Beispiel hierfür ist der Abruf einer TAN aus einer Tabelle bei der Durchführung von Online-Buchungen.

In einer Ausführungsform des erfindungsgemäßen Verfahrens wird bzw. werden die Basiskommunikation und/oder die Folgekommunikation protokolliert.

Wird eine Folgekommunikation abgebrochen, so kann dies mit der Abgabe einer optischen und/oder akustischen Warnmeldung verbunden werden, die auf dem Bildschirm der elektronischen Datenverarbeitungseinrichtung des Anwenders angezeigt und/oder per E-Mail oder SMS an den Anwender versandt wird.

Diese aus dem erfindungsgemäßen Verfahren resultierende Zusatzfunktion kann dazu eingesetzt werden, den Anwender gezielt über Änderungen einer Website zu informieren, beispielsweise über eine Fahrplanänderung eines Verkehrsunternehmens. Hat der Anwender in der Basiskommunikation eine bestimmte Fahrplan-Website des Verkehrsunternehmens aufgerufen und deren Datensätze aufgezeichnet, so würde eine Änderung des Fahrplans durch das Verkehrsunternehmen dazu führen, dass in einer Folgekommunikation eine unzulässige Abweichung von der in der Basiskommunikation aufgezeichneten Ziel-Website festgestellt werden und eine Alarmmeldung abgegeben wird.

Zu diesem Zweck kann der Anwender beispielsweise einen Automatiklauf an seinem Computer einrichten, bei dem routinemäßig täglich, stündlich oder zu vom Anwender vorgegebenen Zeitpunkten eine Folgekommunikation durchgeführt wird, die zur Erfassung einer Änderung des Fahrplans und zum Auslösen eines Alarms führt, der beispielsweise mit dem Versenden einer SMS an den Anwender verbunden ist.

Alternativ oder zusätzlich kann beim Fortsetzen der Folgekommunikation nach dem Feststellen übereinstimmender oder innerhalb einer vorgegebenen Toleranzschwelle liegender Datensätze eine optische und/oder akustische Meldung abgegeben werden.

Das erfindungsgemäße Verfahren kann in modifizierter Form auch zum Automatisieren eines Datenaustauschs zwischen einer elektronischen Datenverarbeitungseinrichtung (Endgerät) eines Anwenders und einer von einem Fremdserver bereitgestellten Ziel-Website durchgeführt werden, wobei dem Anwender die Basiskommunikation von einem professionellen Lead User zur Verfügung gestellt wird, so dass der Anwender mit beliebigen EDV-Kenntnissen nur die Folgekommunikation durchführt. In dieser modifizierten Form wird die Basiskommunikation des Lead Users mit dem die Ziel-Website bereitstellenden Fremdserver durchgeführt, indem der analog zum vorstehend beschriebenen Verfahren
- der Lead User den Recorder startet,
- der Lead User mit Hilfe des Recorders Kontakt mit dem Zielserver über die Eingabe einer URL oder Internetadresse aufnimmt,
- der Lead User eine erste Seite (Page) der Ziel-Website aufruft und entgegennimmt,
- der Lead User die die aufgerufene Seite der Ziel-Website charakterisierenden Datensätze aufnimmt und speichert,
- die beim Benutzen der aufgerufenen Seite der Ziel-Website durch den Lead User eingegebenen Datensätzen und Steuerbefehlen aufgenommen und gespeichert werden,
- die vorstehenden Verfahrensschritte für weitere Seiten der Ziel-Website wiederholt werden,
- die Aufzeichnung der Basiskommunikation durch den Lead User beendet und
- die Basiskommunikation für einen Anwender, der eine Folgekommunikation mit einem Abspielen der in der Basiskommunikation aufgezeichneten Datensätze und Steuerbefehle durchführt, bereitgestellt wird.

In weiterer analoger Anwendung des erfindungsgemäßen Verfahrens wird die Basiskommunikation mit dem die Ziel-Website bereitstellenden Fremdserver vom Lead User durchgeführt durch
- Aufrufen und Entgegennehmen einer Seite der Ziel-Website
- Aufnahme und Speicherung eines die Seite der Ziel-Website charakterisierenden Document Object Models (DOM),
- simultane Aufnahme eines die Seite der Ziel-Website charakterisierenden Rohdatenstroms,
- Aufnahme und Speicherung der Eingabe von Datensätzen und Steuerbefehlen des Lead Users beim Benutzen der Seite der Ziel-Website,
- Wiederholen der vorstehenden Schritte für weitere Seiten der Ziel-Website,
- Beenden der Aufzeichnung der Basiskommunikation und
- Bereitstellen der Basiskommunikation für einen Anwender, der eine Folgekommunikation mit einem Abspielen der in der Basiskommunikation aufgezeichneten Datensätze und Steuerbefehle durchführt.

Eine Durchführung der Basiskommunikation durch einen Lead User anstelle des Anwenders selbst weist die Vorteile auf, dass
- dem unerfahrenen Anwender die Basiskommunikation abgenommen wird,
- Bedienungsfehler durch den Anwender ausgeschlossen werden,
- Fehlerhafte Websites bzw. Seiten einer Website durch den im Umgang mit der EDV erfahrenen Lead User erkannt werden,
- der Lead User die Basiskommunikation in einer daten- und programmspezifischen Sicherheitszone durchführen kann, die gegenüber jedweden äußeren Einflüssen abgeschirmt ist.

Die letztgenannte Variante bietet den wesentlichen Vorteil, dass Viren, Trojaner oder dergleichen ausgeschlossen werden können, so dass beim Vergleich (Compare) der vom Lead User aufgezeichneten Datensätze mit den vom Anwender in der Folgekommunikation aufgenommenen Datensätzen Fremdeinflüsse auf die vom Anwender in der Folgekommunikation aufgenommenen Datensätzen erkannt werden und eine Warnmeldung ausgegeben werden kann.

Ein System zur Ausführung des erfindungsgemäßen Verfahrens ist gekennzeichnet durch eine 3-Band-Maschine mit
- einem ersten Band, auf das das DOM einer Ziel-Website oder Seite einer Ziel-Webseite aufgezeichnet wird,
- einem zweiten Band, auf das ein transportbereinigter Rohdatenstrom der Ziel-Website oder Seite einer Ziel-Webseite aufgezeichnet wird, und
- einem dritten Band oder Steuerband, auf dem die vom Anwender beim Benutzen der Ziel-Website oder Seite einer Ziel-Webseite eingegebenen Datensätze und Steuerbefehle aufgezeichnet werden.

Die 3-Band-Maschine oder eine mit der 3-Band-Maschine verbundene Datenverarbeitungseinrichtung des Anwenders kann
- eine Vergleichseinrichtung, mit der die in der Basiskommunikation aufgezeichneten Daten mit den in einer Folgekommunikation abgerufenen und gespeicherten Daten vergleichbar sind und/oder
- eine Einrichtung zur Eingabe einer Filterbedingung
   enthalten.

Anhand von in der Zeichnung dargestellten Ausführungsbeispielen soll der der Erfindung zugrunde liegende Gedanke näher erläutert werden. Es zeigen:
- Fig. 1: ein Flussdiagramm des Aufzeichnens einer Basiskommunikation mit dem Aufnahmeteil (Recorder) einer 3-Band-Maschine;
- Fig. 2: ein Flussdiagramm einer Folgekommunikation mittels des Abspielgeräts (Player) einer 3-Band-Maschine;
- Fig. 3: ein Flussdiagramm für die automatisierte Kommunikation beim maschinellen Lesen eines Kontoauszugs und
- Fig. 4: ein Flussdiagramm für eine Anwendung des erfindungsgemäßen Verfahrens zum Vermeiden eines Dauerabbuchungsauftrags.

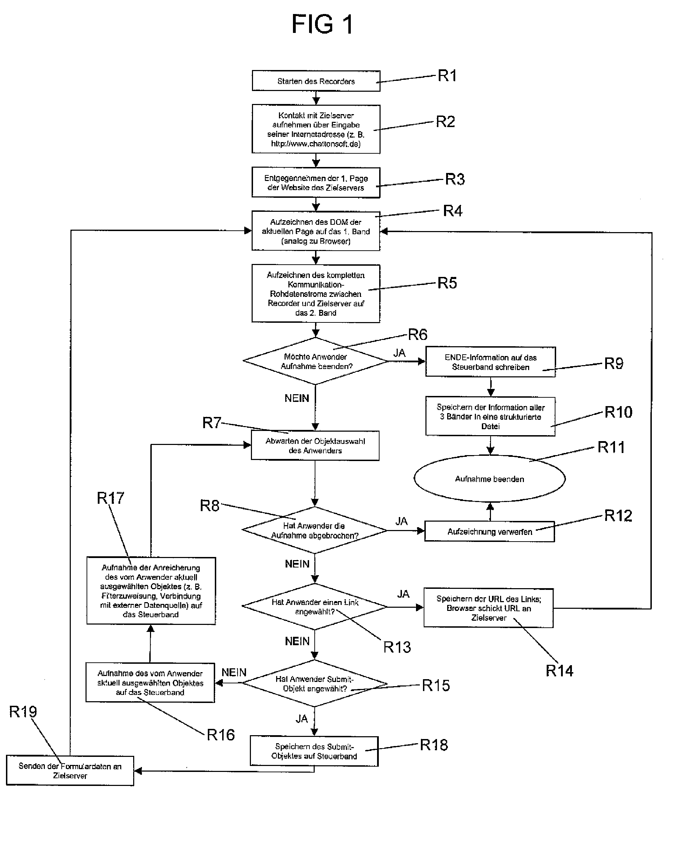

Das in Fig. 1 dargestellte Flussdiagram zeigt das Aufzeichnen einer von einem Anwender durchgeführten Basiskommunikation.

Das Flussdiagramm zeigt im Verfahrensschritt R1 das Starten des Recorders einer 3-Band-Maschine und im Schritt R2 die Kontaktaufnahme des Anwenders mit einem Fremdserver und den Aufruf einer Ziel-Website durch Eingabe einer URL oder Internetadresse. Im Schritt R3 wird die erste Page oder Seite einer Ziel-Website des Fremdservers entgegengenommen. Im Verfahrensschritt R4 wird das DOM der ersten Seite der Ziel-Website auf das erste Band der 3-Band-Maschine analog zu einem Browser und im Verfahrensschritt R5 der komplette Kommunikation-Rohdatenstrom der ersten Seite der Ziel-Website zwischen dem Recorder und dem Fremdserver auf das zweite Band der 3-Band-Maschine aufgezeichnet.

Im Verfahrensschritt R6 wird abgefragt, ob der Anwender die Aufnahme beenden möchte. Trifft dies zu, so wird im Verfahrensschritt R9 eine ENDE-Information auf das Steuerband geschrieben, im Schritt R10 werden die Informationen aller drei Bänder der 3-Band-Maschine in einer geeigneten Datenstruktur gespeichert und im abschließenden Schritt R11 wird die Aufzeichnung der Basiskommunikation beendet.

Möchte der Anwender die Aufzeichnung der Basiskommunikation nicht beenden, so wird im Schritt R7 die Objektauswahl des Anwenders abgewartet und im Schritt R8 geprüft, ob der Anwender die Aufnahme des DOM bzw. des kompletten Kommunikation-Rohdatenstroms abgebrochen hat. Ist dies der Fall, so wird im Schritt R12 die bis dahin durchgeführte Aufzeichnung verworfen und die Aufnahme im Schritt R11 beendet.

Hat der Anwender die Aufnahme nicht abgebrochen, so wird im Verfahrensschritt R13 geprüft, ob der Anwender einen Link angewählt hat. Ist dies der Fall, so wird im Verfahrensschritt R14 die URL des Links gespeichert, vom Browser die URL an den Zielserver übermittelt und zum Verfahrensschritt R4 zurückgesprungen. Hat der Anwender keinen Link angewählt, so wird im Verfahrensschritt R15 geprüft, ob der Anwender ein Submit-Objekt gewählt hat, das HTML-Elemente bezeichnet, die bei einer Anwahl durch den User Formulardaten an den Server zurückliefern.

Hat der Anwender kein Submit-Objekt gewählt, so wird das vom Anwender aktuell ausgewählte Objekt im Verfahrensschritt R16 auf das dritte Band oder Steuerband der 3-Band-Maschine aufgenommen und im anschließenden Schritt R17 eine Anreicherung des vom Anwender aktuell ausgewählten Objektes, wie beispielsweise eine Filterzuweisung oder die Verbindung mit einer externen Datenquelle, auf das Steuerband aufgenommen und zum Schritt R7 zurückgesprungen.

Hat der Anwender dagegen ein Submit-Objekt gewählt, so wird im Verfahrensschritt R18 das (Submit)-Objekt auf dem dritten Band oder Steuerband der 3-Band-Maschine gespeichert und die Formulardaten werden im Verfahrensschritt R19 an den Zielserver gesandt und zum Verfahrensschritt R4 zurückgesprungen.

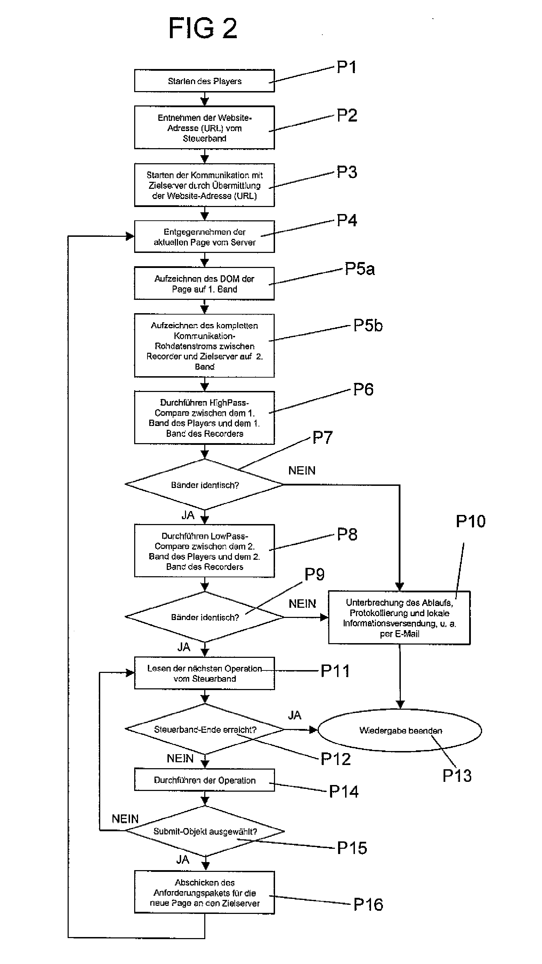

Fig. 2 zeigt in einem Flussdiagramm eine Folgekommunikation, die mit Hilfe eines Wiedergabegeräts (Player) der 3-Band-Maschine durchgeführt wird.

Nach dem Starten des Players im Verfahrensschritt P1 wird im Schritt P2 die Adresse der Website des Fremdservers vom Steuerband entnommen und im Schritt P3 die Kommunikation mit dem Fremdserver durch Übermittlung der URL gestartet. Anschließend wird im Schritt P4 die vom Anwender aufgerufene aktuelle Seite der Ziel-Website vom Fremdserver entgegengenommen und im Schritt P5a das DOM der aktuellen Seite der Ziel-Website auf das erste Band der 3-Band-Maschine aufgezeichnet. Gleichzeitig wird im Schritt P5b der komplette Kommunikation-Rohdatenstrom zwischen dem Recorder und dem Fremdserver auf dem zweiten Band der 3-Band-Maschine aufgezeichnet. Im Schritt P6 wird ein High Pass Compare zwischen dem ersten Band des Players und dem ersten Band des Recorders durchgeführt und die Identität beider Bänder im Schritt P7 geprüft.

Besteht Identität zwischen beiden Bändern, so wird im Verfahrensschritt P8 ein Low Pass Compare zwischen dem zweiten Band des Players und dem zweiten Band des Recorders durchgeführt und im nachfolgenden Schritt P9 geprüft, ob beide Bänder identisch sind. Wird Identität beider Bänder festgestellt, so wird im Schritt P11 die nächste Operation vom Steuerband der 3-Band-Maschine gelesen.

Wird nach dem Schritt P6 keine Identität zwischen dem ersten Band des Players und dem ersten Band des Recorders nach dem Durchführen des High Pass Compare bzw. zwischen dem zweiten Band des Players und dem zweiten Band des Recorders nach dem Durchführen des Low Pass Compare im Schritt P8 festgestellt, so wird der Ablauf der Folgekommunikation im Verfahrensschritt P10 unterbrochen, die Unterbrechung protokolliert und eine lokale Information per E-Mail oder SMS versandt und im Schritt P13 die Wiedergabe beendet.

Wird nach dem Lesen der nächsten Operation vom Steuerband im Verfahrensschritt P11 das Erreichen des Endes des Steuerbandes festgestellt, so wird im Schritt P13 die Wiedergabe beendet.

Ist das im Verfahrensschritt P12 geprüfte Ende des Steuerbandes nicht erreicht, so wird im Schritt 14 die Operation durchgeführt. Anschließend wird im Schritt P15 geprüft, ob ein Submit-Objekt ausgewählt ist. Ist dies nicht der Fall, so wird zum Schritt P11 zurückgesprungen und die nächste Operation vom Steuerband gelesen. Ist dagegen ein Submit-Objekt ausgewählt, so wird das Anforderungspaket für eine neue Seite der Website an den Zielserver im Schritt P16 abgeschickt und zum Schritt P4 zurückgesprungen.

Unter Zugrundelegung des vorstehend beschriebenen Aufzeichnungs- und Abspielverfahrens des erfindungsgemäßen Verfahrens zum Automatisieren des Datenaustauschs werden nachstehend drei Anwendungsbeispiele beschrieben.

Ein erstes Anwendungsbeispiel betrifft die Abgabe einer Warnmeldung für den Anwender bei Änderung einer den Anwender interessierenden Ziel-Website bzw. Seite oder Page einer Ziel-Website. Ein typisches Anwendungsbeispiel hierfür ist eine Fahrplanänderung, über die der Anwender unverzüglich nach einer vom Anbieter, üblicherweise einem öffentlichen oder privaten Verkehrsunternehmen, in Kenntnis gesetzt wird.

Der mit dem vorstehend beschriebenen Aufzeichnungsverfahren aufgezeichnete Fahrplan wird mit der ebenfalls vorstehend beschriebenen Folgekommunikation, die in Fig. 2 in einem Flussdiagramm dargestellt ist, nach Starten des Players und Eingabe der Adresse des Zielservers vom Steuerband aufgerufen. Beim Aufzeichnen des aktuellen DOM der Fahrplan-Website auf dem ersten Band entsprechend dem Schritt P5a sowie des kompletten Kommunikation-Rohdatenstroms zwischen dem Rekorder und dem Zielserver auf dem zweiten Band im Schritt P5b wird ein High-Pass-Compare zwischen dem Band des Players und dem Band des Rekorders im Schritt P6 durchgeführt und beim Vergleich der beiden Bänder gemäß Schritt P7 eine Abweichung festgestellt. Da die Abweichung nicht unter die eingebbaren Filterbedingungen fällt, wird entsprechend dem Schritt P10 der Ablauf unterbrochen, protokolliert und eine lokale Information per E-Mail, SMS oder dergleichen an den Anwender gesandt und dieser damit auf die Fahrplanänderung aufmerksam gemacht.

Die Folgekommunikation kann auf Wunsch des Anwenders entweder nur beim entsprechenden Aufrufen des erfindungsgemäßen Verfahrens initiiert werden oder in vorgebbaren Intervallen, je nach Dringlichkeit fortlaufend, stündlich, täglich oder monatlich, durchgeführt werden bzw. durch Abgabe eines entsprechenden Signals vom Fahrplan-Anbieter ausgelöst werden, wenn sich beispielsweise der Anwender in eine entsprechende Informationsliste des Anbieters einträgt.

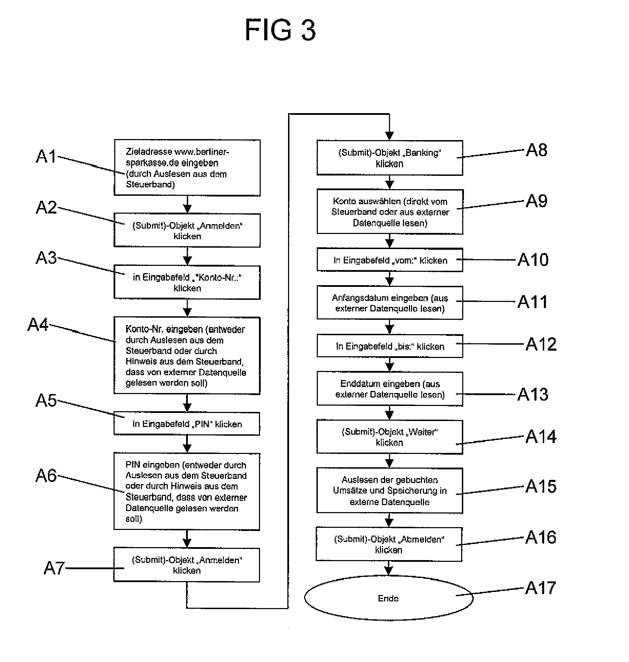

Fig. 3 zeigt in einem Flussdiagramm ein Anwendungsbeispiel zum maschinellen Lesen von Kontoauszügen.

Nachdem im Verfahrensschritt A1 die Zieladresse einer Website vorzugsweise durch Auslesen aus dem Steuerband eingegeben wird, erfolgt im Verfahrensschritt A2 das Anklicken des (Submit)-Objekts "Anmelden" und im Schritt A3 das Anklicken des Eingabefeldes "Konto-Nummer". Im Schritt A4 wird die Konto-Nummer entweder durch Auslesen aus dem Steuerband oder durch einen Hinweis aus dem Steuerband, dass die Konto-Nummer von einer externen Datenquelle gelesen werden soll, eingegeben. Im Verfahrensschritt A5 wird das Eingabefeld "PIN" angeklickt und im Schritt A6 die PIN entweder durch Auslesen aus dem Steuerband oder durch den Hinweis des Steuerbandes, dass von einer externen Datenquelle gelesen werden soll, eingegeben. Im Verfahrensschritt A7 wird das (Submit)-Objekt "Anmelden" angeklickt und im Schritt A8 das (Submit)-Objekt "Banking".

Im Verfahrensschritt A9 wird das Konto entweder direkt vom Steuerband oder durch Lesen einer externen Datenquelle ausgewählt und im Schritt A10 das Eingabefeld "vom" angeklickt. Im Schritt A11 wird das Anfangsdatum eingegeben, das beispielsweise aus einer externen Datenquelle gelesen wird. Im Schritt A12 wird das Eingabefeld "bis" angeklickt und im Schritt A13 das Enddatum eingegeben, das ebenfalls aus einer externen Datenquelle gelesen werden kann.

Im Verfahrensschritt A14 wird das (Submit)-Objekt "weiter" angeklickt und im Schritt A15 werden die gebuchten Umsätze ausgelesen und in einer externen Datenquelle gespeichert. Im Schritt A16 wird das (Submit)-Objekt "Abmelden" angeklickt und damit die maschinelle Lesung von Kontoauszügen im Schritt A17 beendet.

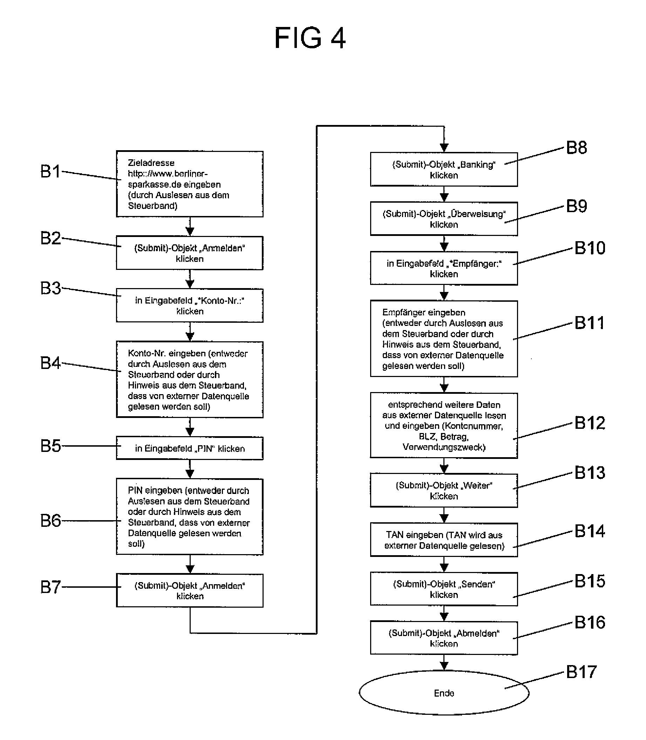

Fig. 4 zeigt ein Flussdiagramm für eine Anwendung des erfindungsgemäßen Verfahrens zum Vermeiden eines Dauerabbuchungsauftrags.

Nachdem im Verfahrensschritt B1 die Zieladresse einer Website vorzugsweise durch Auslesen aus dem Steuerband eingegeben wird, erfolgt im Verfahrensschritt B2 das Anklicken des (Submit)-Objekts "Anmelden" und im Schritt B3 das Anklicken des Eingabefeldes "Konto-Nummer". Im Schritt B4 wird die Konto-Nummer entweder durch Auslesen aus dem Steuerband oder durch einen Hinweis aus dem Steuerband, dass die Konto-Nummer von einer externen Datenquelle gelesen werden soll, eingegeben. Im Verfahrensschritt B5 wird das Eingabefeld "PIN" angeklickt und im Schritt B6 die PIN entweder durch Auslösen aus dem Steuerband oder durch den Hinweis des Steuerbandes, dass von einer externen Datenquelle gelesen werden soll, eingegeben. Im Verfahrensschritt B7 wird das (Submit)-Objekt "Anmelden" angeklickt und im Schritt B8 das (Submit)-Objekt "Banking".

Im Schritt B9 wird das (Submit)-Objekt "Überweisung" angeklickt und im Schritt B10 das Eingabefeld "Empfänger" angeklickt. Im Schritt B11 wird der Empfänger entweder durch Auslesen aus dem Steuerband oder durch einen Hinweis aus dem Steuerband, dass von einer externen Datenquelle ausgelesen werden soll, eingegeben. Im Schritt B12 werden entsprechend weitere Daten wie Kontonummer, Bankleitzahl, Betrag, Verwendungszweck, aus der externen Datenquelle gelesen und eingegeben und im Schritt B13 das (Submit)-Objekt "weiter" angeklickt. Im Schritt B14 wird die TAN, die insbesondere aus einer externen Datenquelle gelesen wird, eingegeben. Im Schritt B15 wird das (Submit)-Objekt "senden" und im Schritt B16 das (Submit)-Objekt "abmelden" angeklickt und damit das automatisierte Verfahren zur Vermeidung eines Dauerabbuchungsauftrags im Schritt B17 abgeschlossen.

## Patentansprüche

1. Verfahren zum Automatisieren eines Datenaustauschs zwischen einer elektronischen Datenverarbeitungseinrichtung (Endgerät) eines Anwenders und einer von einem Fremdserver bereitgestellten Ziel-Website,
**gekennzeichnet durch**
eine Aufzeichnung einer Basiskommunikation des Anwenders mit dem die Ziel-Website bereitstellenden Fremdserver **durch**
1.1 Aufrufen und Entgegennehmen einer Seite (Page) der Ziel-Website,
1.2 Aufnahme und Speicherung von die Seite der Ziel-Website charakterisierenden Datensätzen,
1.3 Aufnahme und Speicherung der Eingabe von Datensätzen und Steuerbefehlen des Anwenders beim Benutzen der Seite der Ziel-Website,
1.4 Wiederholen der Schritte 1.1 bis 1.3 für weitere Seiten der Ziel-Website,
1.5 Beenden der Aufzeichnung der Basiskommunikation und
eine Folgekommunikation **durch** Abspielen der in der Basiskommunikation aufgezeichneten Datensätze und Steuerbefehle **durch**
1.6 Aufrufen der Seite der Ziel-Website,
1.7 Aufnahme und Speicherung der die Seite der Ziel-Website charakterisierenden aktuellen Datensätze,
1.8 Vergleichen der im Schritt 1.1 aufgezeichneten Datensätze mit den im Schritt 1.7 gespeicherten aktuellen Datensätzen,
1.9 Abbrechen der Folgekommunikation bei einer Abweichung der beiden Datensätze und/oder Überschreiten einer vorgegebenen Toleranzschwelle bei einer Abweichung,
1.10 Fortsetzen der Folgekommunikation bei einer Übereinstimmung der Datensätze oder einer innerhalb der Toleranzschwelle liegenden Abweichung der beiden miteinander zu vergleichenden Datensätze, Aufrufen und Ausführen der in der Basiskommunikation gespeicherten Datensätze und Steuerbefehle des Anwenders beim Benutzen der Seite der Ziel-Website
1.11 Wiederholen der Schritte 1.6 bis 1.10 für weitere Seiten der Ziel-Websites und
1.12 Beenden der Folgekommunikation

2. Verfahren nach Anspruch 1, **gekennzeichnet durch** eine Aufzeichnung einer Basiskommunikation des Anwenders mit dem die Ziel-Website bereitstellenden Fremdserver **durch**
2.1 Aufrufen und Entgegennehmen einer Seite der Ziel-Website
2.2.1 Aufnahme und Speicherung eines die Seite der Ziel-Website charakterisierenden Document Object Models (DOM),
2.2.2 simultane Aufnahme eines die Seite der Ziel-Website charakterisierenden Rohdatenstroms,
2.3 Aufnahme und Speicherung der Eingabe von Datensätzen und Steuerbefehlen des Anwenders beim Benutzen der Seite der Ziel-Website,
2.4 Wiederholen der Schritte 2.1, 2.2.1, 2.2.2 und 2.3 für weitere Seiten der Ziel-Website,
2.5 Beenden der Aufzeichnung der Basiskommunikation und
eine Folgekommunikation **durch** Abspielen der in der Basiskommunikation aufgezeichneten Datensätze und Steuerbefehle **durch**
2.6 Aufrufen und Entgegennehmen einer Seite der Ziel-Website,
2.7.1 Aufnahme und Speicherung eines die Seite der Ziel-Website charakterisierenden aktuellen Document Object Models (DOM),
2.7.2 simultane Aufnahme eines die Seite der Ziel-Website charakterisierenden aktuellen Rohdatenstroms,
2.8.1 Durchführen eines High Pass Compare zwischen dem im Schritt 2.2.1 aufgezeichneten und dem im Schritt 2.7.1 gespeicherten DOM und
2.8.2 Durchführen eines Low Pass Compare zwischen dem im Schritt 2.2.2 aufgezeichneten Rohdatenstrom und dem im Schritt 2.7.2 gespeicherten Rohdatenstrom,
2.9 Abbrechen der Folgekommunikation bei einer Abweichung und/oder Überschreiten einer vorgegebenen Toleranzschwelle bei einer Abweichung,
2.10 Fortsetzen der Folgekommunikation bei einer Übereinstimmung oder einer innerhalb der vorgegebenen Toleranzschwelle liegenden Abweichung, Aufrufen und Ausführen der in der Basiskommunikation gespeicherten Datensätze und Steuerbefehle des Anwenders beim Benutzen der Seite der Ziel-Website,
2.11 Wiederholen der Schritte 2.6 bis 2.10 für weitere Seiten der Ziel-Website und
2.12 Beenden der Folgekommunikation

3. Verfahren nach Anspruch 2, **dadurch gekennzeichnet, dass** der im Schritt 2.2.2 aufgezeichnete und der im Schritt 2.7.2 aufgenommene aktuelle Rohdatenstrom transportbereinigt werden.

4. Verfahren nach mindestens einem der vorangehenden Ansprüche, **dadurch gekennzeichnet, dass** die im Schritt 1.2 aufgezeichneten Datensätze, das im Schritt 2.2.1 aufgezeichnete DOM bzw. der im Schritt 2.2.2 aufgezeichnete Rohdatenstrom mit gespeicherten Website-Filterdaten gefiltert und den Anwender nicht interessierende oder störende Inhalte der Seite der Ziel-Website entfernt werden.

5. Verfahren nach mindestens einem der vorangehenden Ansprüche, **dadurch gekennzeichnet, dass** die im Schritt 1.2 oder 2.3 in der Basiskommunikation vom Anwender eingegebenen Datensätze identisch aufgezeichnet und in der Folgekommunikation übereinstimmend wiedergegeben werden.

6. Verfahren nach mindestens einem der vorangehenden Ansprüche 1 bis 4, **dadurch gekennzeichnet, dass** die im Schritt 1.2 aufgezeichneten Datensätze, das im Schritt 2.2.1 aufgezeichnete DOM bzw. der im Schritt 2.2.2 aufgezeichnete Rohdatenstrom mit einer Variablen versehen werden, die die in den Schritten 1.9, 1.10 bzw. 2.9 und 2.10 vorgegebene Toleranzschwelle nachsetzen.

7. Verfahren nach mindestens einem der vorangehenden Ansprüche 2 bis 6, **dadurch gekennzeichnet, dass** die Basiskommunikation auf einer 3-Band-Maschine im Aufnahme-Modus aufgezeichnet wird, wobei nach dem Aufrufen der Ziel-Website simultan
7.1 das die eine Seite der Ziel-Website charakterisierende DOM auf einem ersten Band der 3-Band-Maschine aufgezeichnet wird,
7.2 der die Seite der Ziel-Website charakterisierende transportbereinigte Rohdatenstrom auf einem zweiten Band der 3-Band-Maschine aufgezeichnet wird,
7.3 die vom Anwender beim Benutzen der Seite der Ziel-Website eingegebenen Datensätze und Steuerbefehle auf einem dritten Band (Steuerband) der 3-Band-Maschine aufgezeichnet werden,
7.4 die Schritte 7.1 bis 7.3 simultan für weitere Seiten der Ziel-Website wiederholt werden,
7.5 die Aufzeichnung der Basiskommunikation beendet und
dass die Folgekommunikation im Abspielmodus der 3-Band-Maschine abläuft, indem
7.6 die Seite der Ziel-Website durch eine erste Information des Steuerbandes aufgerufen wird,
7.7 das DOM und der Rohdatenstrom der Seite der Ziel-Website in der Folgekommunikation aufgezeichnet werden,
7.8 ein Vergleich des ersten und zweiten Bandes der Basiskommunikation mit dem ersten und zweiten Band der Folgekommunikation in einem High Pass Compare und Low Pass Compare, insbesonder mittels des ersten und zweiten Bandes der 3-Band-Maschine, durchgeführt wird,
7.9 die Folgekommunikation bei einer Abweichung der beiden Datensätze und/oder Überschreiten einer vorgegebenen Toleranzschwelle abgebrochen wird oder
7.10 die Folgekommunikation bei einer Übereinstimmung oder einer innerhalb der vorgegebenen Toleranzschwelle liegenden Abweichung des DOM und Rohdatenstroms der Ziel-Website fortgesetzt wird, indem die in der Basiskommunikation gespeicherten Datensätze und Steuerbefehle des Anwenders beim Benutzen der Seite der Ziel-Website aufgerufen und ausgeführt werden,
7.11 die Schritte 7.6 bis 7.10 für weitere Seiten der Ziel-Websites wiederholt werden und
7.12 die Folgekommunikation beendet wird.

8. Verfahren nach mindestens einem der vorangehenden Ansprüche, **dadurch gekennzeichnet, dass** beim Fortsetzen der Folgekommunikation nach dem Vergleich der in der Basiskommunikation aufgezeichneten Datensätze mit den in der Folgekommunikation aufgezeichneten Datensätzen für die Eingabe der Datensätze des Anwenders auf externe Datenquellen zugegriffen wird, dass die Basiskommunikation und/oder die Folgekommunikation protokolliert wird bzw. werden, dass beim Abbruch der Folgekommunikation in den Schritten 1.9, 2.9 oder 7.9 eine optische und/oder akustische Warnmeldung abgegeben wird und dass beim Fortsetzen der Folgekommunikation in den Schritten 1.8, 2.10 oder 7.10 eine optische und/oder akustische Meldung abgegeben wird.

9. Verfahren nach Anspruch 8, **dadurch gekennzeichnet, dass** die Warnmeldung oder Meldung auf dem Bildschirm der elektronischen Datenverarbeitungseinrichtung des Anwenders angezeigt und/oder per E-Mail oder SMS an den Anwender versandt wird.

10. Verfahren zum Automatisieren eines Datenaustauschs zwischen einer elektronischen Datenverarbeitungseinrichtung (Endgerät) eines Lead Users oder Anwenders und einer von einem Fremdserver bereitgestellten Ziel-Website,
**gekennzeichnet durch** eine Aufzeichnung einer Basiskommunikation eines Lead Users mit dem die Ziel-Website bereitstellenden Fremdserver **durch**
10.1 Aufrufen und Entgegennehmen einer Seite (Page) der Ziel-Website,
10.2 Aufnahme und Speicherung von die Seite der Ziel-Website charakterisierenden Datensätzen,
10.3 Aufnahme und Speicherung der Eingabe von Datensätzen und Steuerbefehlen des Lead Users beim Benutzen der Seite der Ziel-Website,
10.4 Wiederholen der Schritte 10.1 bis 10.3 für weitere Seiten der Ziel-Website,
10.5 Beenden der Aufzeichnung der Basiskommunikation **durch** den Lead User und
10.6 Bereitstellen der Basiskommunikation für einen Anwender, der eine Folgekommunikation mit einem Abspielen der in der Basiskommunikation aufgezeichneten Datensätze und Steuerbefehle durchführt.

11. Verfahren nach Anspruch 10, **gekennzeichnet durch** eine Aufzeichnung einer Basiskommunikation des Lead Users mit dem die Ziel-Website bereitstellenden Fremdserver **durch**
11.1 Aufrufen und Entgegennehmen einer Seite der Ziel-Website
11.2.1 Aufnahme und Speicherung eines die Seite der Ziel-Website charakterisierenden Document Object Models (DOM),
11.2.2 simultane Aufnahme eines die Seite der Ziel-Website charakterisierenden Rohdatenstroms,
11.3 Aufnahme und Speicherung der Eingabe von Datensätzen und Steuerbefehlen des Lead Users beim Benutzen der Seite der Ziel-Website,
11.4 Wiederholen der Schritte 11.1, 11.2.1,. 11.2.2 und 11.3 für weitere Seiten der Ziel-Website,
11.5 Beenden der Aufzeichnung der Basiskommunikation **durch** den Lead User und
11.6 Bereitstellen der Basiskommunikation für einen Anwender, der eine Folgekommunikation mit einem Abspielen der in der Basiskommunikation aufgezeichneten Datensätze und Steuerbefehle durchführt.

12. Verfahren nach Anspruch 10 oder 11, **dadurch gekennzeichnet, dass** der Lead User die Basiskommunikation in einer daten- und programmspezifischen Sicherheitszone durchführt, die gegenüber jedweden äußeren Einflüssen abgeschirmt ist.

13. System zur Durchführung des Verfahrens nach mindestens einem der vorangegangenen Ansprüche, **gekennzeichnet durch** eine 3-Band-Maschine mit
- einem ersten Band, auf das das DOM einer Ziel-Website oder Seite einer Ziel-Webseite aufgezeichnet wird,
- einem zweiten Band, auf das ein transportbereinigter Rohdatenstrom der Ziel-Website oder Seite einer Ziel-Webseite aufgezeichnet wird, und
- einem dritten Band oder Steuerband, auf dem die vom Anwender beim Benutzen der Ziel-Website oder Seite einer Ziel-Webseite eingegebenen Datensätze und Steuerbefehle aufgezeichnet werden.

14. System nach Anspruch 13, **dadurch gekennzeichnet, dass** die 3-Band-Maschine oder eine mit der 3-Band-Maschine verbundene Datenverarbeitungseinrichtung des Anwenders eine Vergleichseinrichtung enthält, mit der die in der Basiskommunikation aufgezeichneten Daten mit den in einer Folgekommunikation abgerufenen und gespeicherten Daten vergleichbar sind.

15. System nach Anspruch 13 oder 14, **dadurch gekennzeichnet, dass** die 3-Band-Maschine oder eine mit der 3-Band-Maschine verbundene Datenverarbeitungseinrichtung des Anwenders eine Einrichtung zur Eingabe einer Filterbedingung enthält.
